# EUROPEAN PATENT SPECIFICATION

(11) **EP 1 591 427 B1**
(45) Date of publication and mention of the grant of the patent: **22.08.2007**
(21) Application number: 05009346.7
(22) Date of filing: 28.04.2005
(51) Int. Cl.: C03B 33/03, B65G 49/06

(54) **A workstation for machining plates of glass, marble or the like with an automatic system for loading the plates**
Eine Bearbeitungsstation zur Bearbeitung von Scheiben aus Glas, Marmor oder ähnlichem Material mittles eines automatizierten Systems zum Laden der Scheiben
Une station de travaille pour machiner des feuilles de verre, de marbre ou materiau similaire avec un système de chargement automatique des feuilles

(30) Priority: 30.04.2004 IT TO20040275
(43) Date of publication of application: 02.11.2005
(73) Proprietor: BIESSE S.p.A., 61100 Pesaro (IT)
(72) Inventor: Belli, Marco, 61100 Pesaro (Pesaro Urbino) (IT); Frongia, Marco, 61100 Pesaro (Pesaro Urbino) (IT); Grianti, Gianluca, 61100 Pesaro (Pesaro Urbino) (IT)
(74) Representative: Notaro, Giancarlo

(56) References cited:
- EP-A- 1 164 111
- EP-A- 1 284 245
- WO-A-00/34194
- GB-A- 741 109
- PATENT ABSTRACTS OF JAPAN vol. 011, no. 232 (C-437), 29 July 1987 (1987-07-29) -& JP 62 046930 A (BANDOU KIKO KK), 28 February 1987 (1987-02-28)
- PATENT ABSTRACTS OF JAPAN vol. 2003, no. 12, 5 December 2003 (2003-12-05) -& JP 2004 026569 A (NAKAMURA TOME PRECISION IND CO LTD), 29 January 2004 (2004-01-29)
- PATENT ABSTRACTS OF JAPAN vol. 2003, no. 12, 5 December 2003 (2003-12-05) -& JP 2004 099424 A (SHIRAITEKKU:KK), 2 April 2004 (2004-04-02)

## Description

The present invention relates to the field of workstations for machining plates of glass, marble or the like, of the type comprising: a bench, designed to receive thereon the plates to be machined; means provided on the bench for holding the plates to be machined; and a machining head for machining the plates, which is mobile over the bench in at least two horizontal directions orthogonal to one another.

In devices of this type, the machining head is displaced over the bench by means of a cross-member structure, which surmounts the bench and is mobile on the latter like an overhead travelling crane, and along the cross member there is in turn mobile a carriage carrying the machining head. The latter can in turn move vertically with respect to the carriage and is possibly equipped with further regulating axes for enabling orientation of the tool in any desired way. The displacements along the various axes of the system for moving the head are governed by electric motors controlled by an electronic control system.

Machining stations of this type are used, for example, for carrying out operations of cutting of glass plates along any pre-set path and operations of machining of the edge of glass plates (for example, operations of edge-polishing and/or bevelling), as well as operations of cutting the edge of plates of marble or the like.

In machines of this type that have been produced up to now, loading of the plates on the bench of the workstation is normally performed manually. There have also been proposed workstations equipped with automatic systems for loading the plates. However, said systems are typically constituted by equipment of the "pick and place" type and/or robots, such systems having a costly and complicated structure and above all entailing times for loading the plates that are excessively long, with consequent losses in terms of productivity of the workstation. On the other hand, in more recent times there has been a widespread use of workstations with large work benches that comprise, for example, at least two machining areas, for the purpose of increasing productivity. While the machining head is located above one of the two areas for carrying out machining of a plate, the plate previously machined that occupies the other area can be unloaded and replaced by a new plate, which is thus ready to undergo machining immediately by the machining head. Said operating mode can, however, entail a drop in the level of safety of the machine in the case where the plates are loaded and/or unloaded manually without the operators following the necessary safety procedures.

Other machines for preventing this problem have the working surface divided into two and mobile so as to enable loading and unloading of the piece in a safe area, but present both the drawback of occupying twice the amount of space and that of having very high costs.

A workstation of the type indicated in the preamble of claim 1 is known from JP 62 046930 A.

The purpose of the present invention is consequently to provide a workstation of the type referred to above that is equipped with an automatic system for loading and/or unloading plates, and in which said system will have a structure that is extremely simple and of low cost and that is moreover extremely efficient in its operation in order not to penalize the machine but rather to improve it from the standpoint of rate of production, and finally to increase safety and limit to a minimum the space occupied.

With a view to achieving said purpose, the subject of the invention is a workstation as indicated in claim 1.

In the preferred embodiment of the invention, the aforesaid conveyor system comprises a plurality of closed-loop conveyor belts arranged parallel to one another in the aforesaid direction of conveyance. Preferably, the conveyor system comprises both one end for loading the plates to be machined and one end for unloading the machined plates, in order to automate both loading and unloading of the plates. Of course, each closed-loop conveyor belt can extend without any interruption from the aforesaid loading end to the aforesaid unloading end, or, alternatively, two or more closed-loop conveyor belts may be provided, arranged one as the prolongation of the other to cover the distance that extends from the loading end to the unloading end.

Of course, when the conveyor system according to the invention deposits a plate to be machined on the holding means provided on the bench of the workstation, it is necessary to position the plate correctly in the working plane with respect to the two cartesian reference directions x, y.

For this purpose, the workstation according to the invention envisages, in its preferred embodiment, retractable thrust members having an extracted operative position, in which they can push the plate in the two directions x, y against reference arrests.

Once again in the case of the preferred embodiment, the unloading end of the conveyor-belt system is interfaced with a further conveyor system, for example a motor-driven-roller surface, having a horizontal direction of conveyance perpendicular to the direction of conveyance of the belt system, on which the plate that has reached the unloading end is deposited when the conveyor belts are brought into their lowered position, so as to enable evacuation of the machined plates to a station set at a distance from the working area of the machine.

The use of the conveyor system according to the invention enables complete isolation of the working area of the machine by means of adequate safety protections, since the plates to be machined can be deposited on the loading ends of the conveyor system or taken from the unloading end outside the boundary of said protections. Of course, the operations of loading and unloading upstream and downstream of the system according to the invention can, if it is so desired, be automated by the aid of automatic equipment of any type, for example by means of robots.

An important advantage of the conveyor system according to the invention is that it is extremely fast. The time necessary for raising the conveyor belts into their conveying position, causing the conveyor system to advance by one step, and lowering the belts into their resting position, i.e., the complete cycle of operations necessary for replacing a machined plate with a new plate to be machined, is shorter than the average time for machining a plate. This means that the system according to the invention is suited for being used in a particularly advantageous way on workstations that have benches of large width with at least two machining areas. In this way, the conveyor system is able to supply the machining head with a new plate to be machined already ready in the machining position as soon as the head has finished machining another plate in the adjacent working area. Said result is moreover achieved, as has been said, in conditions of complete operator safety for the reasons that have already been explained above.

Of course, the electronic control unit of the workstation enables setting and adjustment of the various operating parameters, and in the first place the length of each step of the conveyor system, which depends upon the characteristics of the machine, the dimensions of the plates to be machined, and the number of plates that are simultaneously moved by means of the conveyor system.

Once again in the case of the preferred embodiment, the mutual spacing between the different closed-loop conveyor belts is adjustable, by any regulating means of a known type, either manually controlled or motor-driven.

Further characteristics and advantages of the invention will emerge from the ensuing description with reference to the annexed plate of drawings, which are provided purely by way of non-limiting example and in which:
Figure 1 is a schematic perspective view of a workstation according to a preferred embodiment of the present invention;
Figures 2 and 3 illustrate a side view of a detail of the conveyor system forming part of the workstation according to the invention, in two different conditions of operation;
Figures 4, 5, and 6 are schematic side views illustrating the working principle of the conveyor system according to the invention;
Figure 7 is a schematic top plan view of the workstation of Figure 1 and of the auxiliary conveyor system associated thereto for evacuation of the machined plates; and
Figures 8, 9, and 10 are side views of the auxiliary conveyor system illustrated in Figure 7, in three different conditions of operation.

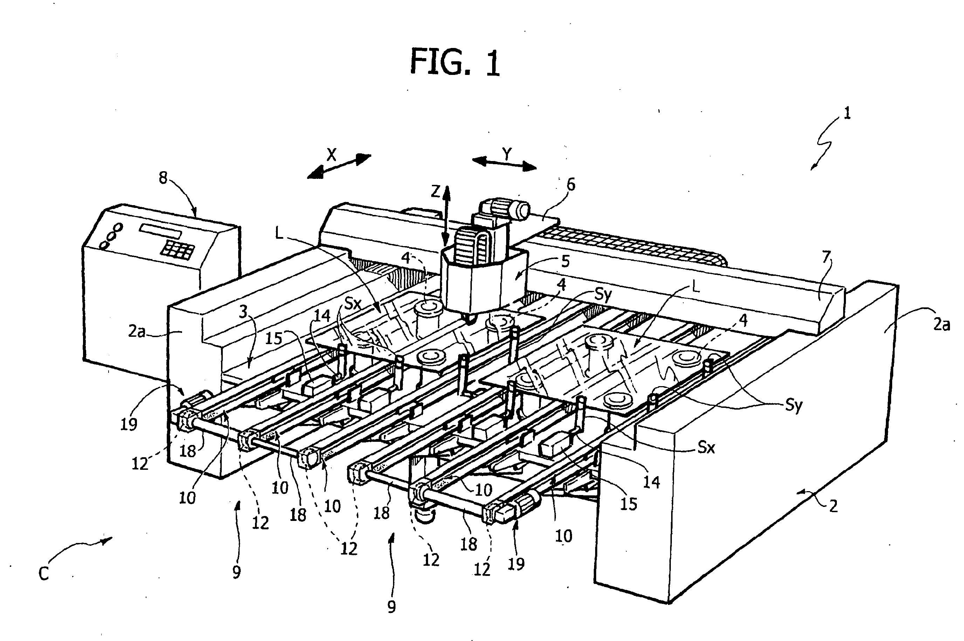

In Figure 1, the reference number 1 designates as a whole a workstation for machining glass plates. Numeric-control workstations of this type are normally used for carrying out various machining operations on glass plates, including cutting of a plate of glass according to any pre-set path, or machining the edge of a plate of glass that has been previously cut, such as, for example, edge-polishing and/or bevelling. In the example illustrated, the workstation 1 comprises a fixed structure 2, which includes a bench 3 defining a horizontal surface on which glass plates L to be machined are placed. The bench 3 is provided with means for holding the plates L in the machining position. Said holding means are typically constituted, for example, by blocks 4, which can be positioned and fixed, as desired, on top of the surface 3 and are provided at the top and at the bottom with suction pads. In order to communicate the suction pressure to the suction pads, the blocks 4 communicate with a system of pipes coming from a negative-pressure source. Machining of the plates L is carried out by a machining head 5, which is moved in the two directions x, y orthogonal to one another contained in the horizontal plane. The head 5 carries a machining tool of any type (for example, a tool, a cutting aggregate, or a grinding wheel). Moving of the machining head 5 in the y-axis is obtained in so far as the head is fixed to a carriage 6 that is mounted mobile along a cross-member structure 7 surmounting the bench 3. Moving of the head in the other horizontal direction x (Figure 1) is obtained in so far as the cross-member structure 7 is mounted mobile like an overhead travelling crane in the direction x at its two ends on top of two sides 2a forming part of the fixed structure 2. In a typical configuration, the machining head 5 is moreover provided with the possibility of a displacement in the vertical direction z with respect to the carriage 6. The displacements of the machining head 5 along the three axes x, y, z are controlled by respective electric motors governed by an electronic control unit 8.

The working head could in any case be arranged also for other displacements so as to be able to carry out machining operations of any complexity in space.

All the constructional details regarding the fixed structure 2 of the machine, the motor-driven control system for controlling the displacements of the machining head 5, and the architecture of the electronic control system are not described herein in so far as they can be made in any known way and in so far as, in themselves, they do not fall within the scope of the present invention. The elimination of said details from the drawings moreover renders the latter more readily understandable.

The example illustrated in Figure 1 relates to the case of a workstation 1 with a bench 3 that is sufficiently wide to provide two machining areas set alongside one another (the areas where the plates L are positioned in Figure 1). Said arrangement obviously enables an advantage in terms of productivity, since whilst the machining head 5 machines the plate L that occupies one of the two machining areas, the plate previously machined that occupies the other machining area can be replaced so as to have a new plate ready to be machined by the machining head as soon as it has finished the machining operation currently in progress, without the operations of replacement of a machined plate with a new plate to be machined entailing lengthening of the cycle time. However, the invention would be equally applicable also to a workstation equipped with a single machining area.

According to the invention, each machining area of the workstation 1 is served by an automatic conveyor system 9 for loading the plates to be machined in the machining station and for unloading the machined plates from the machining station.

Each conveyor system 9 comprises a plurality of motor-driven closed-loop conveyor-belt units, at least partially set above the bench 3 in a direction of conveyance, which in the example illustrated in Figure 1 is the direction of the x-axis. The various closed-loop belt units, designated by the reference number 10, have a frame, which will be better described in what follows, carrying the motor means for actuation of the conveyor belts, and can be displaced vertically between a raised position, in which step-by-step advance of the conveyor-belt system is enabled, and a lowered resting position.

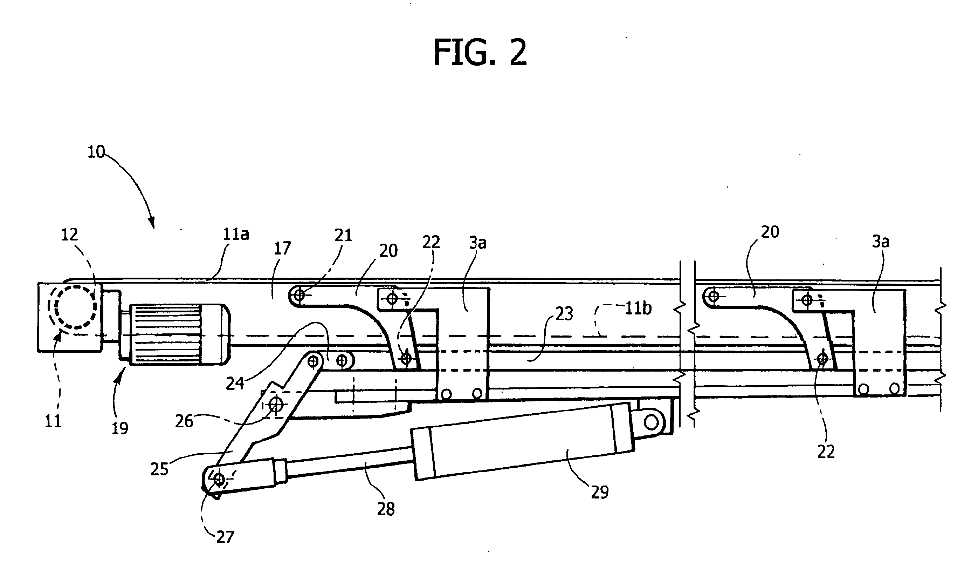

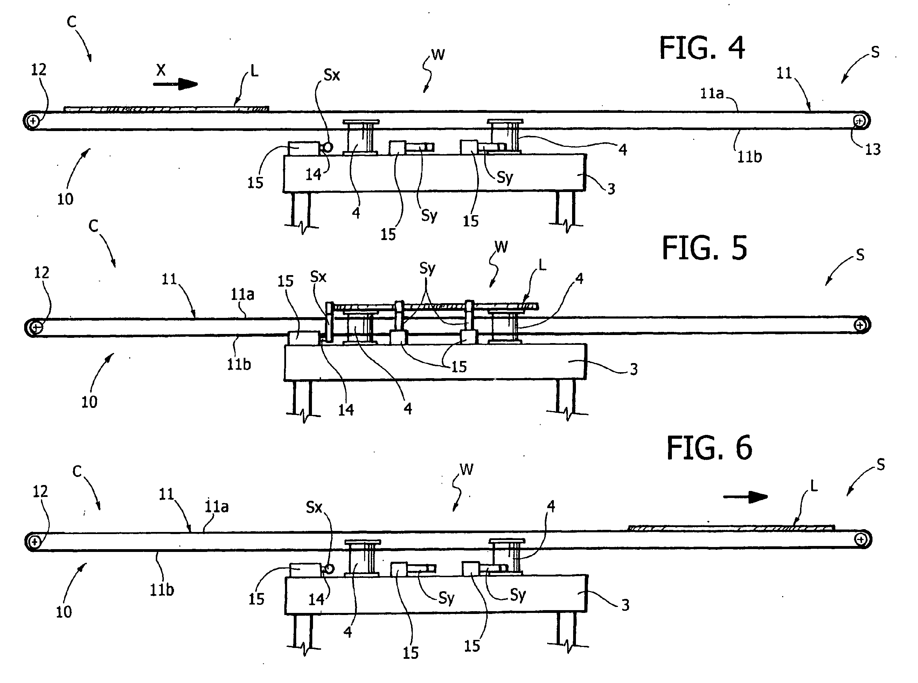

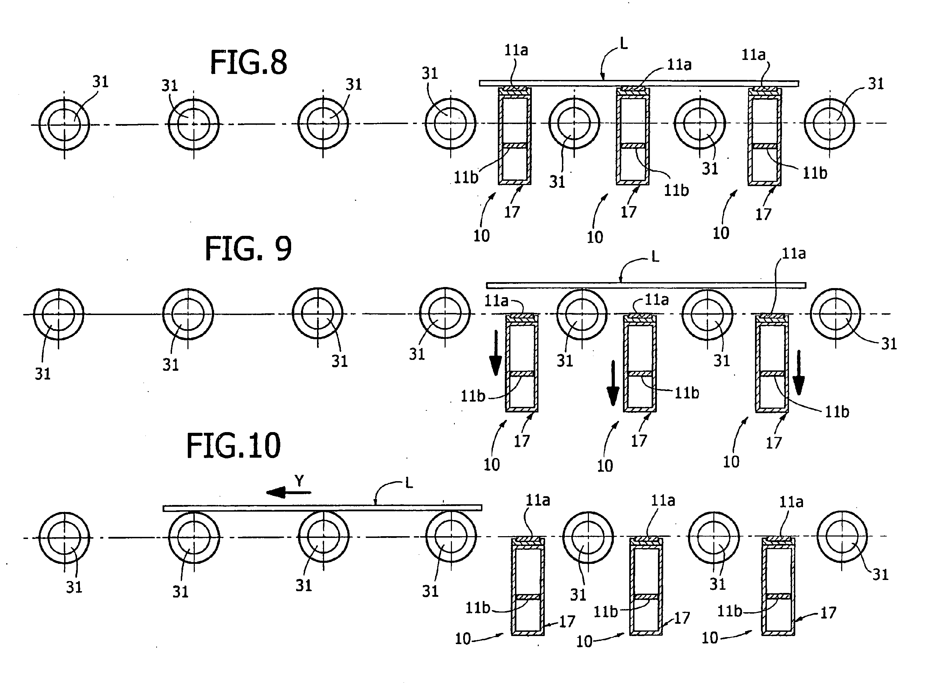

The working principle of the conveyor system provided by means of the belts 9 is illustrated in Figures 4, 5, and 6 with reference to a simplified embodiment. In said figures, the bench 3 is represented schematically in side view, with the suction-pad blocks 4 pre-arranged on it. In addition, Figures 4-6 show a closed-loop conveyor-belt unit 10 with a closed-loop conveyor belt 11 run over top end pulleys 12, 13. The frame 17 (Figure 2) carrying the pulleys 12, 13, as well as the corresponding transmission for driving them (not visible in Figures 4-6) can be displaced vertically, as already indicated, by means that will be described in what follows, between a raised position (Figures 4 and 6) and a lowered position (Figure 5). The frame 17 for supporting the belt 11 defines a top sliding surface (see also Figures 8-10) for the top branch 11a of the belt 11. In the example illustrated, the frame 17 is constituted exclusively by a hollow metal section. The lower branch 11b of the belt 11 is, instead, sent back within the internal cavity of the frame 17 (see Figures 8-10).

With reference once again to Figures 4-6, illustrated therein for reasons of clarity is a single plate L, which is moved by steps in the direction x via the conveyor-belt unit 10. Whenever the belts 11 are controlled to bring about a step of advance of the plate L, they are in their raised position, as illustrated in Figures 4 and 6. Whenever the belts are in the interval between one step of advance and the next, they are brought into the lowered position illustrated in Figure 5.

In Figures 4-6, the reference C designates the end of the conveyor belts 11 in a position corresponding to which the plates L are loaded. Said end portion C is set at a distance from the bench 3 of the workstation, so as to enable depositing of the plates L in said position in complete safety for the operator. The operation of depositing can be carried out manually or else also with the aid of automatic loading systems, for example by means of robots.

At the moment of deposit of a new plate L to be loaded at the loading end C of one of the conveyor systems 9 (Figure 1), the conveyor system in question comes to occupy its lowered position. In said condition, the operator or the automatic loading system set upstream of the system according to the invention deposits a new plate L on the top branches 11a of the conveyor belts 11 constituting the conveyor system 9. Preferably, on the fixed structure of the machine there are pre-arranged references for precise positioning of the plate in x and y directions (not visible in the drawings), up against which the plate can be brought to assume a reference position. Once said operation has been carried out, the operator can start the cycle of transfer of the plate, by operating, for example, a control pushbutton. Following upon operation of the pushbutton, the conveyor system 9, with the conveyor belts 11 making it up, is brought into its raised position, thus spacing the plate L away from the fixed references against which it had initially been referenced. The condition thus reached is illustrated in Figure 4. In said condition, the conveyor system can be activated for controlling the movement of the conveyor belts 11 for the purpose of causing the plate L to advance by one or more steps. In the real situation, a number of plates in succession are found on the conveyor belts 11 at each moment so that more than one step may be required for each individual plate to move from the loading position to the machining position. In the simplified example of Figures 4-6, a single plate L is illustrated, which reaches the machining position designated by W in Figures 4-6 by means of a single step of advance. Once said step has been performed, the conveyor system 9 is lowered into the position illustrated in Figure 5, so that the plate L is "consigned" and deposited on top of the suction-pad blocks 4 carried by the bench 3. In said condition, the top branch 11a of each belt 11 is set at a distance downwards with respect to the plate L, which is supported only by the suction-pad blocks 4.

Of course, before activating the suction-pad blocks 4 for holding the plate L stably in a pre-set position, it is necessary to refer the plate L precisely in position along the axes x and y. Said operation is performed by activating thrust arms Sₓ and S_{y}, which push the plate in the direction x and in the direction y against fixed references of arrest (not visible in the drawings) carried by the bench 3. In the example illustrated in Figures 4-6, as well as in the subsequent annexed drawings, the thrust arms Sₓ and S_{y} can be displaced between an operative upright position and an inoperative horizontal position, in so far as they are carried at one of their ends by horizontal rods 14 controlled by actuators 15. The actuators 15 are able both to control a rotation of the horizontal rods 14, for displacing the arms Sₓ and S_{y} between their inoperative lowered position and their operative upright position, and to control axial advance of the rods 14, for pushing the arms Sₓ and S_{y} against the edges of the plate L when said arms are in their operative upright position.

Once the plate L has been referred in position along x and along y, the suction-pad blocks 4 are activated, and machining of the plate is carried out by the machining head 5 of the workstation 1 (Figure 1) according to the usual technique.

Once machining has been completed, the suction-pad blocks 4 are de-activated, and the conveyor belts 11 are again raised so as to raise the plate L with respect to the blocks 4. Once said position is reached, a new step of advance of the belts 11 can be controlled, for the purpose of carrying the machined plate L into a position corresponding to an unloading end S of the conveyor belts, which is located at a distance from the bench 3, so as to enable evacuation of the plate either manually or with automatic systems of picking-up, in conditions of total safety.

Of course, in the real situation, as has already been mentioned, on each conveyor belt 11 there are arranged a number of plates L in succession so that, when a machined plate L exits from the machining position W, a new plate L to be machined replaces it in a machining position W. The cycle necessary for carrying out replacement of a machined plate with a new plate to be machined in a position corresponding to the machining position W is, as may be seen, extremely simple and fast, a fact which enables prevention of losses of productivity, particularly in workstations like the one illustrated in Figure 1, where the plate L that occupies one of the two working areas can be replaced in a shorter time than what is required for the machining head 5 to carry out in the mean time machining of the plate that occupies the adjacent working area.

It should moreover be noted that Figures 4-6 illustrate for reasons of clarity a simplified example, in which each conveyor unit 10 comprises a single conveyor belt 11 extending from the loading end C to the unloading end S. It is, however, possible, as will be illustrated in detail hereinafter, also to envisage a number of conveyor belts aligned one as the prolongation of the other to cover the distance between the loading end C and the unloading end S.

With reference to Figures 1 and 2, 3, as well as to Figures 8-10, each belt-conveyor unit 10 comprises, as already mentioned above, a frame 17 in the form of sectional elements or box-type elements made of sheet metal, on which there are mounted so that they can turn the pulleys 12, 13 arranged at the end of each closed-loop conveyor belt 11. The pulleys 12, 13 are toothed pulleys for engagement of corresponding toothed surfaces of the belts 11. As may be seen in Figure 1, the various pulleys 12 of the belts 11 of one and the same conveyor system 9 are connected in rotation to one another by means of transverse connection shafts 18 driven by a single motor-reducer assembly 19 arranged on one side of the loading end of the conveyor system.

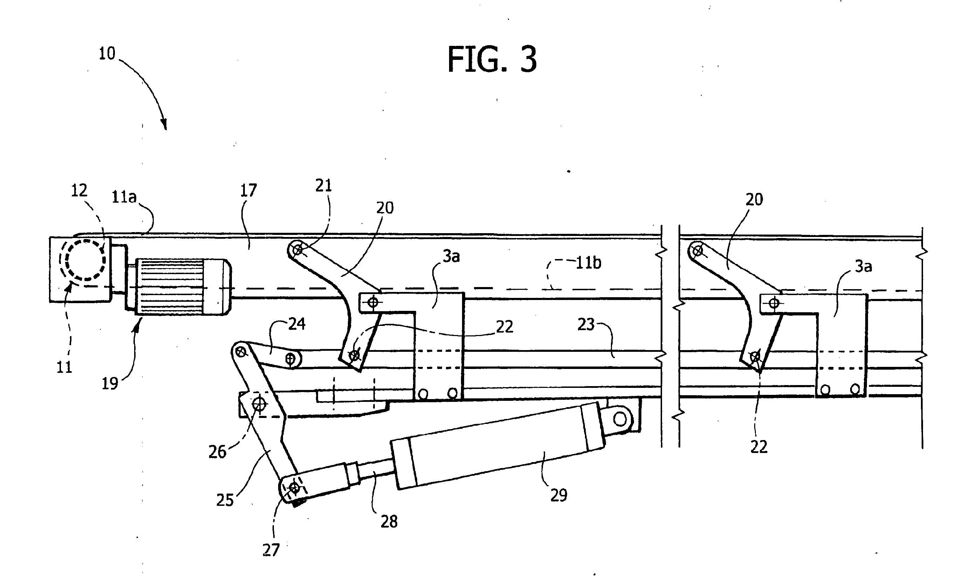

Figures 2 and 3 illustrate an example of embodiment of the means that carry out vertical displacement of each unit 10. The frame 17 of each unit 10 is connected to the structure of the bench 3 by means of an articulated-parallelogram system. More precisely, the structure of the machine comprises a plurality of brackets 3a (Figures 2, 3), on which there are mounted in articulated fashion, like rockers, L-shaped levers 20, each having an end 21 connected in an articulated way to the frame 17, and the opposite end 22 connected in an articulated way to a common longitudinal rod 23, which has one end connected by means of a connection rod 24 to a rocker control member 25, mounted oscillating in 26 on the structure of the machine and having its end 27 connected in an articulated way to the stem 28 of a fluid cylinder 29 or any other type of actuator of a known type.

Figure 2 shows the system with the cylinder 29 in its elongated condition, corresponding to the lowered position of the frames 17.

When the cylinder 29 is brought into its retracted condition, the L-shaped levers 20 are made to rotate in a clockwise direction (as viewed in Figure 2) until they reach the position illustrated in Figure 3, corresponding to the raised condition of the unit 10, in which the motor reducer 19 can be actuated for controlling advance of the belts 11.

Preferably, the structure, including the brackets 3a, can be position-adjusted above the bench in the direction y by manual or motor-driven control means in order to adapt the relative position of the units 10 to the requirements of each specific application.

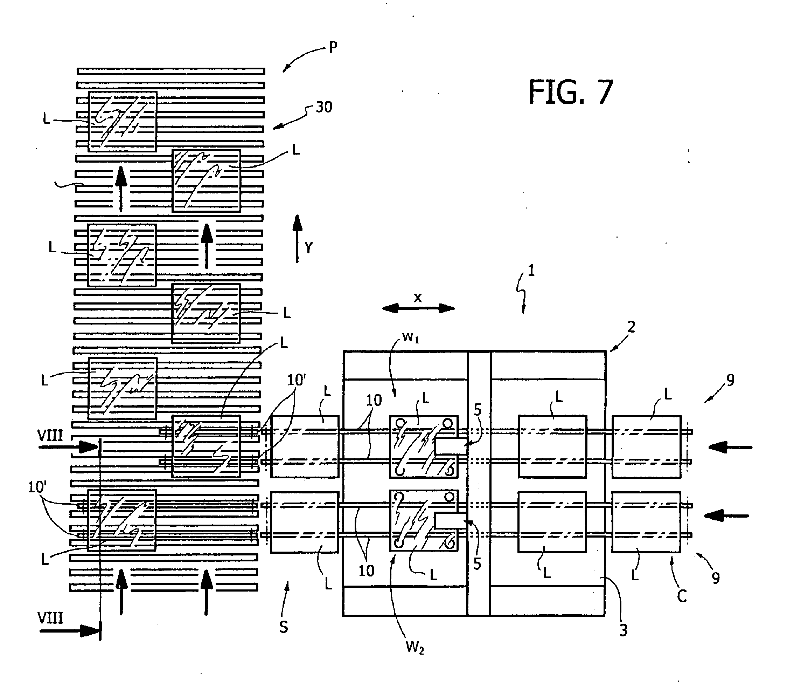

Figure 7 illustrates a plant using the workstation of Figure 1, according to a preferred embodiment. In this case, set in a position immediately adjacent to the unloading end S of the two conveyor systems 9 is a motor-driven-roller surface 30, oriented in the horizontal direction, y, orthogonal to the horizontal direction x of conveyance of the systems 9 for conveying the plates L associated to the bench 3. On the prolongation of the belt units 10 of the two conveyor systems 9, which serve the two working areas, designated by W₁ and W₂ in Figure 7, of the workstation 1, there are arranged further belt-conveyor systems 10 altogether similar to the units 10 described above and provided also with a similar system for displacement in a vertical direction. The auxiliary belt units 10 receive the plates L from the unloading end S of the belt units upstream and deposit them, by lowering, on top of the motor-driven-roller surface 30, which transfers them in the direction y as far as a pick-up end P (Figure 7). In order to feed the plates L coming from the two working areas W₁ and W₂ on two parallel lanes of the roller surface 30, the auxiliary belt units 10 arranged on the prolongation of said working areas have different lengths, as may be seen in Figure 7.

Figures 8-10 illustrate a cross section according to the line VIII-VIII of Figure 7 in the different operating conditions that follow one another during the step of transfer of a plate L on the motor-driven-roller surface 30.

Figure 8 illustrates the step in which a plate L arrives at the end of a series of auxiliary belt units 10. During displacement of the plate L, the frames 17 are in their raised position. When the motor reducer for controlling the belts 11 is stopped, the system of vertical displacement of the units 10 is actuated to bring them into the lowered position illustrated in Figure 9, where the plate L abandons the units 10 to be deposited on the motor-driven rollers 31 of the roller surface 30.

In the annexed plate of drawings, the constructional details of the motor-driven-roller surface are not illustrated since said structure can be made in any known way. As soon as the plate L is received on the motor-driven rollers 31, the latter feed it in the direction y (Figure 10) as far as the pick-up end P (Figure 7).

Of course, without prejudice to the principle of the invention, the details of construction and the embodiments may vary widely with respect to what is described and illustrated herein purely by way of non-limiting example.

For example, the belt units 10 could be replaced by any other equivalent conveyor system of the "pick and place" type designed to bring about step-by-step advance of the plates when it occupies a raised operative condition, and to deposit them in succession on the suction-pad blocks 4, when it is brought into a lowered resting condition.

## Claims

1. A workstation, for machining plates of glass, marble or the like, comprising:
- a bench (3), designed to receive thereon the plates (L) to be machined at a working area;
- retention means (4) provided on the bench (3), for holding the plates (L) to be machined at said working area,
- a machining head (5) for machining the plates (L) at said working area, which can move over the bench (3) in at least two horizontal directions (x, y) orthogonal to one another,
- means (9) for conveying the plates (L) to be machined to a machining position onto said working area (W) and for bringing the machined plates (L) from the machining position at said working area (W) to an unloading position, said conveying means comprising a step conveyor system (9), which is set according to a horizontal direction (x) of conveyance across at least part of the bench (3) and having a loading end (C) for loading the plates (L) to be machined and an unloading end (S) for unloading the machined plates (L),
- wherein said conveyor system (9) can be displaced between a raised operative position, for the step-by-step conveyance of the plates (L) along said direction of conveyance (x), and a lowered resting position, in which it can be positioned at each interval comprised between two successive steps of advance of the conveyor system, in order to deposit on said retention means (4) the plate (L) which each time occupies the machining position at said working area (W),
said workstation being **characterized in that** said conveying ends of the conveyor system are set at a distance from the machining position at said working area (W), so that the plates to be machined can be deposited on the loading end of the conveyor system outside the boundary of said working area and the machined plates can be taken from the unloading end of the conveyor system outside the boundary of said working area.

2. The workstation according to Claim 1, **characterized in that** said conveyor system (9) comprises a plurality of closed-loop conveyor belt units (10) arranged parallel to one another in the direction of conveyance (x) and each including a closed-loop conveyor belt (11) run over end pulleys (12, 13), carried by a frame (17) that can be displaced vertically with respect to a supporting structure.

3. The workstation according to Claim 2, **characterized in that** the frame (17) of each conveyor-belt unit (10) comprises a horizontal plane for supporting the horizontal top branch (11a) of the respective closed-loop conveyor belt (11).

4. The workstation according to Claim 2, **characterized in that** at least one end pulley (12) of each belt unit (10) of one and the same conveyor system (9) is connected in rotation to the corresponding pulleys of the other units (10) of the same system (9), the frame (17) associated to one of said units carrying a motor-reducer assembly (19) for actuation of all the belt units of one and the same conveyor system (9).

5. The workstation according to Claim 2, **characterized in that** the frame (17) of each belt unit (10) is constituted by a hollow metal structure having a horizontal top surface (16) for supporting the top horizontal branch (11a) of the respective closed-loop conveyor belt (11), and an internal cavity over which is run the lower branch (11b) of the respective closed-loop conveyor belt (11).

6. The workstation according to Claim 5, **characterized in that** each frame (17) is connected to a supporting work structure by means of an articulated-parallelogram system (20), which can be actuated by control means (29).

7. The workstation according to Claim 6, **characterized in that** the fixed structure of the workstation has a plurality of fixed brackets (3a), which support, in an oscillating way, a plurality of rocker levers (20), connected in an articulated way at one end (21) to the frame (17) of a respective belt unit (10) and moreover connected in an articulated way at the opposite end (22) to a common actuation rod (23), controlled by said control means.

8. The workstation according to Claim 7, **characterized in that** said control means comprise at least one fluid cylinder (29) or any other kind of actuator of a known type.

9. The workstation according to Claim 1, **characterized in that** the bench (3) has at least two machining areas (W₁, W₂) served by two conveyor systems (9) of the type referred to above.

10. The workstation according to Claim 9, **characterized in that** associated to the workstation is an electronic control unit which actuates in turn one of the conveyor systems (9) for replacing the plate (L) that occupies a machining position after said plate has been machined, with a total time of the cycle of transfer of the plate that is not longer than the time for machining a plate (L), which is in the mean time undergoing machining in the adjacent machining area (W₂).

11. The workstation according to Claim 9, **characterized in that** the unloading ends of the conveyor systems (9) are designed to deposit the machined plates (L) on a motor-driven-roller surface (30), which removes the machined plates (L) in a horizontal direction (y) orthogonal to the aforesaid direction of conveyance (x).

12. The workstation according to Claim 2, **characterized in that** for each conveyor unit (10) the path that extends from the loading end (C) to the unloading end (S) is covered by one or more closed-loop conveyor belts (11) arranged one as the prolongation of the other.

13. The workstation according to Claim 9, **characterized in that** the two conveyor systems (9) that serve the two machining areas (W₁, W₂) have ends for unloading the plates (L) on the aforesaid motor-driven-roller surface (30) that are set at a distance from one another in the direction (x) of conveyance, so that the machined plates (L) deposited by the two conveyor systems (9) on the motor-driven-roller surface 30 are evacuated along two parallel lanes of the motor-driven-roller surface (30).

14. The workstation according to Claim 2, **characterized in that** the relative position of the conveyor-belt units (10) in the horizontal direction orthogonal to said direction of conveyance can be adjusted.

15. The workstation according to Claim 1, **characterized in that** it comprises means for reference in position of a plate to be machined along the two aforesaid orthogonal horizontal directions (x, y).

16. The workstation according to Claim 15, **characterized in that** said means for reference in position of the plate comprise at least one pusher arm (Sₓ, S_{y}) carried by the bench (3) and can be displaced between an operative position and an inoperative position.

## Patentansprüche

1. Bearbeitungsstation zum Bearbeiten von Platten aus Glas, Marmor oder dergleichen, die Folgendes aufweist:
- einen Tisch (3), der dafür ausgelegt ist, die Platten (L) aufzunehmen, die in einem Bearbeitungsbereich bearbeitet werden sollen,
- Haltemittel (4), die auf dem Tisch (3) angeordnet sind, um die Platten (L) festzuhalten, die in dem Bearbeitungsbereich bearbeitet werden sollen,
- einen Bearbeitungskopf (5) zum Bearbeiten der Platten (L) in dem Bearbeitungsbereich, der in wenigstens zwei horizontalen, zueinander orthogonal verlaufenden Richtungen (x, y) über den Tisch (3) bewegt werden kann,
- Mittel (9) zum Transportieren der zu bearbeitenden Platten (L) in eine Bearbeitungsposition auf dem Bearbeitungsbereich (W) und zum Bringen der bearbeiteten Platten (L) aus der Bearbeitungsposition in dem Bearbeitungsbereich (W) in eine Entladeposition, wobei das Transportmittel ein Schritttransportsystem (9) aufweist, das entsprechend einer horizontalen Transportrichtung (x) über wenigstens einen Teil des Tisches (3) ausgerichtet ist und ein Ladeende (C) zum Laden der zu bearbeitenden Platten (L) und ein Entladeende (S) zum Entladen der bearbeiteten Platten (L) aufweist,
- wobei das Transportsystem (9) verschoben werden kann zwischen: einer angehobenen Arbeitsposition zum schrittweisen Transportieren der Platten (L) entlang der Transportrichtung (x), und einer abgesenkten Ruheposition, in der es in jedem Intervall, das zwischen zwei aufeinanderfolgenden Vorschubschritten des Transportsystems gebildet wird, positioniert werden kann, um die Platte (L), die jedes Mal die Bearbeitungsposition in dem Bearbeitungsbereich (W) einnimmt, auf den Haltemitteln (4) abzulegen,
wobei die Bearbeitungsstation **dadurch gekennzeichnet ist, dass** die Transportenden des Transportsystems in einem Abstand von der Bearbeitungsposition in dem Bearbeitungsbereich (W) eingestellt sind, so dass die zu bearbeitenden Platten am Ladeende des Transportsystems außerhalb der Grenzen des Bearbeitungsbereichs abgelegt werden können und die bearbeiteten Platten von dem Entladeende des Transportsystems außerhalb der Grenzen des Bearbeitungsbereichs heruntergenommen werden können.

2. Bearbeitungsstation nach Anspruch 1, **dadurch gekennzeichnet, dass** das Transportsystem (9) mehrere Endlostransportbandeinheiten (10) aufweist, die in der Transportrichtung (x) parallel zueinander angeordnet sind und jeweils ein Endlostransportband (11) aufweisen, das über Endrollen (12, 13) geführt wird, die durch einen Rahmen (17) getragen werden, der vertikal relativ zu einer tragenden Konstruktion verschoben werden kann.

3. Bearbeitungsstation nach Anspruch 2, **dadurch gekennzeichnet, dass** der Rahmen (17) jeder Transportbandeinheit (10) eine horizontale Ebene aufweist, um den horizontalen oberen Abschnitt (11a) des jeweiligen Endlostransportbandes (11) zu tragen.

4. Bearbeitungsstation nach Anspruch 2, **dadurch gekennzeichnet, dass** wenigstens eine Endrolle (12) jeder Bandeinheit (10) ein und desselben Transportsystems (9) drehfest mit den entsprechenden Rollen der anderen Einheiten (10) desselben Systems (9) verbunden ist, wobei der Rahmen (17), der mit einer der Einheiten verbunden ist, eine Motoruntersetzungsbaugruppe (19) zum Betätigen aller Bandeinheiten ein und desselben Transportsystems (9) trägt.

5. Bearbeitungsstation nach Anspruch 2, **dadurch gekennzeichnet, dass** der Rahmen (17) jeder Bandeinheit (10) durch eine metallische Hohlkonstruktion gebildet wird, die eine horizontale Oberseitenfläche (16) aufweist, um den oberen horizontalen Abschnitt (11a) des jeweiligen Endlostransportbandes (11) zu tragen, und einen inneren Hohlraum aufweist, über den der untere Abschnitt (11b) des jeweiligen Endlostransportbandes (11) geführt wird.

6. Bearbeitungsstation nach Anspruch 5, **dadurch gekennzeichnet, dass** jeder Rahmen (17) mittels eines Parallelogramm-Gelenkgestänges (20), das durch ein Steuermittel (29) betätigt werden kann, mit einer tragenden Arbeitskonstruktion verbunden ist.

7. Bearbeitungsstation nach Anspruch 6, **dadurch gekennzeichnet, dass** die feste Konstruktion der Bearbeitungsstation mehrere feste Halterungen (3a) aufweist, die oszillierend mehrere Kipphebel (20) tragen, die an einem Ende (21) an dem Rahmen (17) einer jeweiligen Bandeinheit (10) angelenkt sind und außerdem am entgegengesetzten Ende (22) an einer gemeinsamen Betätigungsstange (23), die durch das Steuermittel gesteuert wird, angelenkt sind.

8. Bearbeitungsstation nach Anspruch 7, **dadurch gekennzeichnet, dass** das Steuermittel wenigstens einen Fluidzylinder (29) oder eine sonstige Art von Stellglied eines bekannten Typs aufweist.

9. Bearbeitungsstation nach Anspruch 1, **dadurch gekennzeichnet, dass** der Tisch (3) wenigstens zwei Bearbeitungsbereiche (W₁, W₂) aufweist, die durch zwei Transportsysteme (9) des oben genannten Typs bedient werden.

10. Bearbeitungsstation nach Anspruch 9, **dadurch gekennzeichnet, dass** mit der Bearbeitungsstation eine elektronische Steuereinheit verbunden ist, die im Wechsel eines der Transportsysteme (9) betätigt, um die Platte (L), die eine Bearbeitungsposition einnimmt, nachdem diese Platte bearbeitet wurde, in einer Gesamtzeit des Taktes des Transportes der Platte auszutauschen, die nicht länger als die Zeit für das Bearbeiten einer Platte (L) ist, die in der Zwischenzeit einer Bearbeitung in dem angrenzenden Bearbeitungsbereich (W₂) unterzogen wird.

11. Bearbeitungsstation nach Anspruch 9, **dadurch gekennzeichnet, dass** die Entladeenden des Transportsystems (9) dafür ausgelegt sind, die bearbeiteten Platten (L) auf einer Fläche (30) aus motorgetriebenen Walzen abzulegen, welche die bearbeiteten Platten (L) in einer horizontalen Richtung (y) orthogonal zu der Transportrichtung (x) herunternimmt.

12. Bearbeitungsstation nach Anspruch 2, **dadurch gekennzeichnet, dass** bei jeder Transporteinheit (10) der Pfad, der sich von dem Ladeende (C) zu dem Entladeende (S) erstreckt, mittels eines oder mehrerer Endlostransportbänder (11) überbrückt wird, von denen eines in Fortsetzung des anderen angeordnet ist.

13. Bearbeitungsstation nach Anspruch 9, **dadurch gekennzeichnet, dass** die beiden Transportsysteme (9), welche die beiden Bearbeitungsbereiche (W₁, W₂) bedienen, Enden zum Entladen der Platten (L) auf die Fläche (30) aus motorgetriebenen Walzen aufweisen, die in einem Abstand voneinander in der Transportrichtung (x) eingestellt sind, so dass die bearbeiteten Platten (L), die durch die beiden Transportsysteme (9) auf der Fläche (30) aus motorgetriebenen Walzen abgelegt werden, entlang zweier paralleler Bahnen der Fläche (30) aus motorgetriebenen Walzen heruntergenommen werden.

14. Bearbeitungsstation nach Anspruch 2, **dadurch gekennzeichnet, dass** die relative Position der Transportbandeinheiten (10) in der horizontalen Richtung orthogonal zu der Transportrichtung eingestellt werden kann.

15. Bearbeitungsstation nach Anspruch 1, **dadurch gekennzeichnet, dass** sie Mittel aufweist, die als Positionierungsbezugspunkte für eine zu bearbeitende Platte entlang den zwei orthogonalen horizontalen Richtungen (x, y) dienen.

16. Bearbeitungsstation nach Anspruch 15, **dadurch gekennzeichnet, dass** die Mittel, die als Positionierungsbezugspunkte für die Platte dienen, wenigstens einen Schiebearm (Sₓ, S_{y}) aufweisen, der durch den Tisch (3) getragen wird und zwischen einer Arbeitsposition und einer Ruheposition verschoben werden kann.

## Revendications

1. Station de travail, pour l'usinage de plaques de verre, de marbre ou similaires, comprenant :
- un établi (3), conçu pour recevoir dessus les plaques (L) à usiner au niveau d'une zone de travail ;
- des moyens de maintien (4) disposés sur l'établi (3) pour maintenir les plaques (L) à usiner au niveau de ladite zone de travail,
- une tête d'usinage (5) pour l'usinage des plaques (L) au niveau de ladite zone de travail, qui peut se déplacer au-dessus de l'établi (3) dans au moins deux directions horizontales (x, y) orthogonales l'une à l'autre,
- des moyens (9) pour acheminer les plaques (L) à usiner à une position d'usinage sur ladite zone de travail (W) et pour amener les plaques usinées (L) de la position d'usinage au niveau de ladite zone de travail (W) à une position de déchargement, lesdits moyens d'acheminement comprenant un système d'acheminement par étapes (9), qui est placé selon une direction horizontale (x) d'acheminement à travers au moins une partie de l'établi (3) et comportant une extrémité de chargement (C) pour charger les plaques (L) à usiner et une extrémité de déchargement (S) pour décharger les plaques usinées (L),
- dans laquelle ledit système d'acheminement (9) peut être déplacé entre une position fonctionnelle élevée, pour l'acheminement étape par étape des plaques (L) le long de ladite direction d'acheminement (x), et une position de repos abaissée, dans laquelle il peut être positionné à chaque intervalle compris entre deux étapes successives d'avancée du système d'acheminement, afin de déposer sur lesdits moyens de maintien (4) la plaque (L) qui occupe chaque fois la position d'usinage au niveau de ladite zone de travail (W),
ladite station de travail étant **caractérisée en ce que** lesdites extrémités d'acheminement du système d'acheminement sont placées à une certaine distance de la position d'usinage au niveau de ladite zone de travail (W), de sorte que les plaques à usiner peuvent être déposées sur l'extrémité de chargement du système d'acheminement à l'extérieur de la délimitation de ladite zone de travail et les plaques usinées peuvent être retirées de l'extrémité de déchargement du système d'acheminement à l'extérieur de la délimitation de ladite zone de travail.

2. Station de travail selon la revendication 1, **caractérisée en ce que** ledit système d'acheminement (9) comprend une pluralité d'unités de courroie transporteuse en boucle fermée (10) agencées parallèles les unes aux autres dans la direction d'acheminement (x) et chacune comprenant une courroie transporteuse en boucle fermée (11) défilant sur des poulies de queue (12, 13), portées par un cadre (17) qui peut être déplacé verticalement par rapport à une structure de support.

3. Station de travail selon la revendication 2, **caractérisée en ce que** le cadre (17) de chaque unité de courroie transporteuse (10) comprend un plan horizontal pour supporter la branche supérieure horizontale (11a) de la courroie transporteuse en boucle fermée (11) respective.

4. Station de travail selon la revendication 2, **caractérisée en ce qu'**au moins une poulie de queue (12) de chaque unité de courroie (10) d'un seul et même système d'acheminement (9) est raccordée en rotation aux poulies correspondantes des autres unités (10) du même système (9), le cadre (17) associé à une desdites unités portant un ensemble moteur-réducteur (19) pour l'actionnement de toutes les unités de courroie d'un seul et même système d'acheminement (9).

5. Station de travail selon la revendication 2, **caractérisée en ce que** le cadre (17) de chaque unité de courroie (10) est constitué d'une structure métallique creuse présentant une surface supérieure horizontale (16) pour supporter la branche horizontale supérieure (11 a) de la courroie transporteuse en boucle fermée (11) respective, et une cavité interne sur laquelle défile la branche inférieure (11 b) de la courroie transporteuse en boucle fermée (11) respective.

6. Station de travail selon la revendication 5, **caractérisée en ce que** chaque cadre (17) est raccordé à une structure de travail de support au moyen d'un système à parallélogramme articulé (20), qui peut être actionné par des moyens de commande (29).

7. Station de travail selon la revendication 6, **caractérisée en ce que** la structure fixe de la station de travail comporte une pluralité de supports inférieurs fixes (3a), lesquels supportent, de façon oscillante, une pluralité de leviers de balancier (20) raccordés de manière articulée à une extrémité (21) du cadre (17) d'une unité de courroie (10) respective et, de plus, raccordés de manière articulée à l'extrémité opposée (22) à une tige d'actionnement commune (23), commandée par lesdits moyens de commande.

8. Station de travail selon la revendication 7, **caractérisée en ce que** lesdits moyens de commande comprennent au moins un cylindre de fluide (29) ou tout autre type d'actionneur d'un type connu.

9. Station de travail selon la revendication 1, **caractérisée en ce que** l'établi (3) présente au moins deux zones d'usinage (W₁, W₂) servies par deux systèmes d'acheminement (9) du type évoqué ci-dessus.

10. Station de travail selon la revendication 9, **caractérisée en ce qu'**elle comporte, associée à la station de travail, une unité de commande électronique qui actionne tour à tour l'un des systèmes d'acheminement (9) pour remplacer la plaque (L) qui occupe une position d'usinage après que ladite plaque a été usinée, avec une durée totale de cycle de transfert de la plaque qui n'est pas plus longue que la durée d'usinage d'une plaque (L), qui subit dans le même temps un usinage dans la zone d'usinage adjacente (W₂).

11. Station de travail selon la revendication 9, **caractérisée en ce que** les extrémités de déchargement des systèmes d'acheminement (9) sont conçues pour déposer les plaques usinées (L) sur une surface de rouleaux motorisés (30) qui retire les plaques usinées (L) dans une direction horizontale (y) orthogonale à la direction d'acheminement (x) précitée.

12. Station de travail selon la revendication 2, **caractérisée en ce que**, pour chaque unité d'acheminement (10), le trajet qui s'étend de l'extrémité de chargement (C) à l'extrémité de déchargement (S) est couvert par une ou plusieurs courroies transporteuses en boucle fermée (11) agencées dans le prolongement les unes des autres.

13. Station de travail selon la revendication 9, **caractérisée en ce que** les deux systèmes d'acheminement (9) qui servent les deux zones d'usinage (W₁, W₂) présentent des extrémités pour décharger les plaques (L) sur la surface de rouleaux motorisés (30) précitée qui sont disposées à une certaine distance l'une de l'autre dans la direction (x) d'acheminement, de sorte que les plaques usinées (L) déposées par les deux systèmes d'acheminement (9) sur la surface de rouleaux motorisés (30) sont évacuées le long de deux lignes parallèles de la surface de rouleaux motorisés (30).

14. Station de travail selon la revendication 2, **caractérisée en ce que** la position relative des unités de courroie transporteuse (10) dans la direction horizontale orthogonale à ladite direction d'acheminement peut être ajustée.

15. Station de travail selon la revendication 1, **caractérisée en ce qu'**elle comprend des moyens pour référencer la position d'une plaque à usiner le long des deux directions horizontales orthogonales (x, y) précitées.

16. Station de travail selon la revendication 15, **caractérisée en ce que** lesdits moyens pour référencer la position de la plaque comprennent au moins un bras de poussée (Sₓ, S_{y}) porté par l'établi (3) peuvent être déplacés entre une position fonctionnelle et une position non fonctionnelle.
